Europäisches Patentamt

European Patent Office

Office européen des brevets

(19)

(11) Veröffentlichungsnummer: **0 021 410**
**B1**

# (12) EUROPÄISCHE PATENTSCHRIFT

(45) Veröffentlichungstag der Patentschrift:
04.04.84

(21) Anmeldenummer: 80103573.4

(22) Anmeldetag: 24.06.80

(51) Int. Cl.³: **H 04 L 25/12**

(54) **Schaltungsanordnung für einen elektronischen Gleichstrom-Telegrafiesender.**

(30) Priorität: 26.06.79 DE 2925747

(43) Veröffentlichungstag der Anmeldung:
07.01.81 Patentblatt 81/1

(45) Bekanntmachung des Hinweises auf die Patenterteilung:
04.04.84 Patentblatt 84/14

(84) Benannte Vertragsstaaten:
AT BE CH FR GB IT LI NL SE

(56) Entgegenhaltungen:
GB - A - 1 266 353
US - A - 3 922 487

(73) Patentinhaber: SIEMENS AKTIENGESELLSCHAFT,
Berlin und München Wittelsbacherplatz 2,
D-8000 München 2 (DE)

(72) Erfinder: Wild, Alfred, Ing.grad., Pirkheimerstrasse 8,
D-8000 München 70 (DE)

## Schaltungsanordnung für einen elektronischen Gleichstrom-Telegrafiesender

Die Erfindung betrifft eine Schaltungsanordnung für einen elektronischen Gleichstrom-Telegrafiesender gemäß dem Oberbegriff des Anspruches 1.

In den bestehenden Telegrafie- und Datennetzen erfolgt die Signalisierung und der Datenaustausch auf den Anschlußleitungen mittels Gleichstrom-Telegrafiesender mit hoher Sendespannung. Die Teilnehmer sind über duplexfähige Vierdraht-Doppelstrom-Leitungen (z. B. ±60 V, ±20 mA) oder halbduplexfähige Zweidraht-Einfachstrom-Leitungen (z. B. 120 V, 40 mA) an die Vermittlungsanlagen oder an Übertragungseinrichtungen angeschlossen. In Einzelfällen werden die Teilnehmer über duplexfähige Vierdraht-Einfachstrom-Leitungen (z. B. 120 V, 40 mA) angeschlossen.

Da die Teilnehmer über Anschlußleitungen verschiedener Art und Länge an das Vermittlungsamt angeschlossen sind, muß für jeden Teilnehmer ein Leitungsergänzungswiderstand manuell eingestellt werden. Es sind bereits Anordnungen für einen elektronischen Gleichstrom-Telegrafiesender bekannt, bei denen der Strom auf der Anschlußleitung, der sogenannte Linienstrom, mit Hilfe automatischer Regeleinrichtungen auf einem konstanten Wert gehalten wird. Diese automatische Regeleinrichtung kann entweder den herkömmlichen Leitungsergänzungswiderstand ersetzen oder mit Vorteil zwischen die Telegrafenbatterie und die Sendetastschaltung, die die Anschlußleitung tastet, geschaltet werden.

Eine bekannte Schaltung zur Konstanthaltung des Linienstromes arbeitet nach dem Prinzip des stetigen Reglers (US-PS 3 922 487). Dabei ist unabhängig von der Leitungslänge bzw. vom Widerstand der Übertragungsleitung, dem sogenannten Schleifenwiderstand, die aufgenommene Leistung konstant. Die nicht an die Anschlußleitung abgegebene Leistung wird in der Regelschaltung in Wärme umgesetzt. Diese ist wegen des großen Leitungsergänzungswiderstandes bei kurzen Leitungslängen und im Kurzschlußfall besonders groß. Beim Aufbau eines elektronischen Gleichstrom-Telegrafiesenders in einer modernen integrierten raumsparenden Schaltkreistechnik sind daher zusätzliche Maßnahmen zum Ableiten der in Wärme umgesetzten Verlustleistung erforderlich. Es müssen daher einerseits großflächige Kühlkörper und andererseits erhebliche Lufträume bereitgestellt werden, wodurch sich ein erheblicher Raumbedarf ergibt.

Aus der GB-PS 1 266 353 ist eine Schaltungsanordnung für die Konstanthaltung der Betriebsspannung bei stark variierenden Strömen in einer Telegrafievermittlung bekannt. Bei dieser bekannten Schaltungsanordnung sind mehrere parallel geschaltete Stromversorgungseinheiten mit den Versorgungsleitungen der Telegrafievermittlung verbunden. Jede dieser Stromversorgungseinheiten weist dabei eine Stromversorgung auf, welche im normalen Betriebszustand eine konstante Betriebsspannung an die Versorgungsleitungen der Telegrafievermittlung abgibt. Dieser Stromversorgung sind für die Pufferung der Betriebsspannung Zellen einer Batterie parallel geschaltet. Die Batterie ist im normalen Betriebszustand von den Versorgungsleitungen abgetrennt. Sie ist in diesem Zustand mit einer gesonderten Stromversorgung verbunden, über die die einzelnen Zellen der Batterie aufgeladen werden.

Bei Ausfall der mit den Versorgungsleitungen der Telegrafievermittlung verbundenen Stromversorgung wird die dieser parallel geschaltete Batterie an die Versorgungsleitungen angeschaltet. Fällt dabei die Spannung auf den Versorgungsleitungen durch die ständige Entladung der Batterie unter eine vorgegebene Schwelle, so werden über einen Schaltkontakt weitere Zellen der Batterie zugeschaltet, um die für einen ordnungsgemäßen Betrieb der Telegrafievermittlung erforderliche Betriebsspannung auch bei Ausfall der im normalen Betriebszustand mit den Versorgungsleitungen verbundenen Stromversorgung aufrecht zu erhalten.

Eine Anwendung des aus der GB-PS 1 266 353 bekannten Schaltungsprinzips bei einem aus der US-PS 3 922 487 bekannten Regler würde zu dem Ergebnis führen, daß dem Regler zur Linienstromregelung auch bei Ausfall einer Stromversorgung eine konstante Betriebsspannung zugeführt wird. Damit bleiben aber die bereits oben aufgezeigten Nachteile dieses Reglers erhalten.

Zur Reduzierung der Verlustleistung sind bei elektronischen Gleichstrom-Telegrafiesendern auch Regelschaltungen zur Konstanthaltung des Linienstroms bekannt, die nach dem Prinzip des Schaltreglers arbeiten. Dabei handelt es sich um eine getastete Stromregelung, bei der eine Meßeinrichtung die Größe des Linienstromes mißt und in Abhängigkeit von der Abweichung des Istwertes vom Sollwert das Tastverhältnis eines zusätzlich tastenden Kontaktes steuert. Durch die Tastung ist eine Glättung des Ausgangsstromes erforderlich. Diese bekannte Regelschaltung hat den Nachteil, daß ein größerer Aufwand wegen der zusätzlichen Tastanordnung erforderlich ist und daß Schwierigkeiten bei der notwendigen Glättung des Ausgangsstromes auftreten. Es ist daher zusätzlich eine Siebdrossel erforderlich.

Aufgabe der Erfindung ist es, einen elektronischen Gleichstrom-Telegrafiesender aufzuzeigen, der mit einer Stromregelschaltung nach dem Prinzip des stetigen Reglers arbeitet und bei dem die maximal auftretende Verlustleistung wesentlich reduziert ist.

Diese Aufgabe wird durch die Merkmale des kennzeichnenden Teils des Anspruches 1 gelöst.

Der Grundgedanke der Erfindung besteht darin, daß die Spannung am Eingang der Stromregelschaltung, die nach dem Prinzip des stetigen Reglers arbeitet, in Abhängigkeit von der Leitungslänge bzw. vom Schleifenwiderstand automatisch stufenweise erhöht oder abgesenkt wird. Die Lösung hat den Vorteil, daß die maximal auftretende Verlustleistung wesentlich verringert wird, so daß Maßnahmen zum Abführen der in Wärme umgesetzten Verlustleistung entfallen oder erheblich einfacher werden. Durch die Anwendung der Stromregelschaltung nach dem Prinzip des stetigen Reglers ist ein wesentlich geringerer Aufwand erforderlich, da zusätzliche Sieb- und Glättungsmittel sowie Tastschaltung entfallen. Die Lösung erlaubt einen besonders vorteilhaften wirtschaftlichen Aufbau des elektronischen Gleichstrom-Telegrafiesenders in einer modernen integrierten Schaltkreistechnik mit geringstmöglichem Raumbedarf. Da die automatische Spannungsumschaltung unverzögert und somit vor dem Erreichen der Regelgrenze durch die Regelschaltung erfolgt, bleiben neben den statischen auch die dynamischen Eigenschaften einer Sendeschaltung mit konstanter Eingangsspannung an der Stromregelschaltung erhalten. Die Lösung eignet sich vorteilhaft für Gleichstrom-Telegrafiesender mit Einfachstrom- oder Doppelstromtastung.

Einzelheiten der Erfindung werden anhand der in den Figuren dargestellten Ausführungsbeispiele erläutert.

Es zeigt

Fig. 1 ein Prinzipschaltbild des elektronischen Gleichstrom-Telegrafiesenders gemäß der Erfindung,

Fig. 2 ein vorteilhaftes Ausführungsbeispiel eines elektronischen Gleichstrom-Telegrafiesenders mit Einfachstrom-Tastung und

Fig. 3 ein weiteres vorteilhaftes Ausführungsbeispiel eines elektronischen Gleichstrom-Telegrafiesenders mit mehrstufiger Spannungsumschaltung.

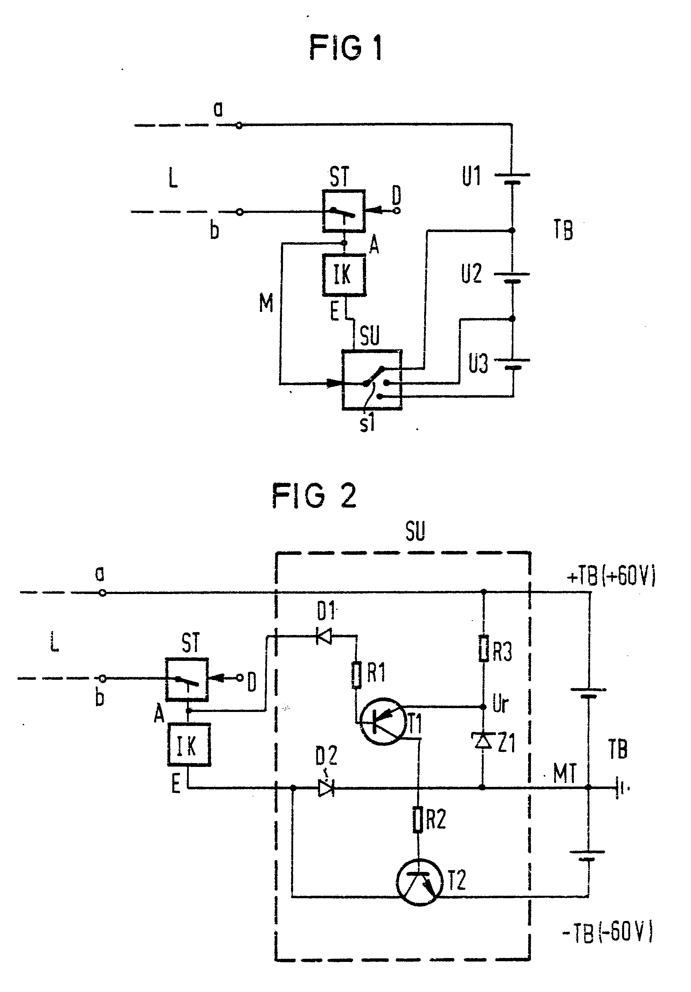

Die Fig. 1 zeigt im Prinzip die neue Lösung. Der elektronische Gleichstrom-Telegrafiesender besteht aus der Sendetastschaltung ST, der Stromregelschaltung IK, der Telegrafenbatterie TB mit den Teilspannungen U1, U2 und U3 und der Schaltstufe SU. Die Schaltstufe SU schaltet abhängig von der Stellung des Schaltkontaktes s1 entweder die Teilspannung U1 oder die Teilspannungen U1 + U2 oder U1 + U2 + U3 an den Eingang E der Stromregelschaltung, die nach dem Prinzip des stetigen Reglers arbeitet, durch. Am Ausgang der Stromregelschaltung entsteht ein konstanter Strom, der der Sendetastschaltung ST zugeführt wird, die ihrerseits über die Ansteuerleitung D im Rhythmus der zu übertragenden Datenschritte oder Wähl- und Vermittlungskriterien den Ausgang A der Regelschaltung an die Ader b der Übertragungsleitung L anschaltet. Die Sendetastschaltung kann vereinfacht als Schalter gedacht werden, der wahlweise den Ausgang der Regelschaltung IK an die Ader b der Leitung L anschaltet oder von der Leitung abtrennt. Die praktische Realisierung der Sendetastschaltung ST und der Stromregelschaltung IK ist bekannt und nicht Gegenstand der vorliegenden Erfindung. Der gemeinsame Pol für die von der Schaltstufe SU durchgeschalteten Spannungen der Telegrafenbatterie TB ist in diesem Ausführungsbeispiel mit der Ader a der Leitung L direkt verbunden. Im praktischen Betrieb können noch Überstromschutzschaltungen für den Erdschlußfall zwischengeschaltet sein. Die Leitung M kann im beschriebenen Ausführungsbeispiel auch nach der Sendetastschaltung an der Ader b der Leitung L angeschlossen werden. Die Sendetastschaltung kann aber auch in die Ader a der Leitung L eingeschaltet werden, so daß der Ausgang A der Stromregelschaltung IK direkt mit der Ader b der Leitung L verbunden wäre. Vorteilhaft ist es auch möglich, die Sendetastschaltung mit der Stromregelschaltung zu kombinieren, so daß lediglich eine Stufe vorhanden ist. Am Ausgang A der Stromregelschaltung IK wird die Spannung auf der Übertragungsleitung gemessen und davon abhängig der Kontakt s1 der Schaltstufe SU umgeschaltet. Im dargestellten Zustand wird von der Schaltstufe SU die Spannung U1 der Telegrafenbatterie TB an die Regelschaltung durchgeschaltet. Die Spannung am Ausgang A der Stromregelschaltung, die mit der Spannung auf der Leitung L übereinstimmt, steuert über die Leitung M den Kontakt s1. Der Kontakt s1 wird beim Überschreiten eines bestimmten, in der Schaltstufe SU eingestellten Schwellwertes durch die Spannung am Ausgang A der Stromregelschaltung umgesteuert (bei der Betrachtung von negativen Spannungen liegt das erwähnte Überschreiten dann vor, wenn die Spannung am Ausgang A negativer als der Schwellwert ist). Bei kurzen Leitungen, die einen kleinen Schleifenwiderstand aufweisen, ist der Spannungsabfall auf der Leitung L gering, so daß der in der Schaltstufe SU eingestellte Spannungsschwellwert nicht überschritten wird; der Kontakt s1 bleibt in der gezeichneten Lage. Bei größeren Schleifenwiderständen steigt der Spannungsabfall auf der Leitung L an, der Schwellwert in der Schaltstufe SU wird überschritten, und der Schaltkontakt s1 wird in die nächste Schaltstellung umgesteuert, so daß die Teilspannungen U1 + U2 an den Eingang E der Regelschaltung IK angeschaltet sind. Bei noch größeren Schleifenwiderständen wird ein zweiter größerer Spannungsschwellwert überschritten, wodurch der Schaltkontakt s1 um eine Stellung weitergeschaltet wird, so daß die Summe aus den Teilspannungen U1 + U2 + U3 am Eingang E der Stromregelschaltung IK angeschaltet ist. Beim Unterschreiten der einzelnen Schwellwerte wird der Schaltkontakt s1 wieder stufenweise in die gezeichnete Ausgangsstellung zurückgeschaltet. Es werden jeweils so viel Teilspannungen zugeschaltet bzw. abgeschaltet, daß die Regelschaltung IK noch sicher im Regelbereich arbeitet.

Die Umschaltung auf die verschiedenen Teilspannungen erfolgt ohne jede Verzögerung, so daß beim Erreichen des jeweiligen Spannungsschwellwertes durch die Sendespannung auch eine sofortige dynamische Anpassung bei der Umschaltung erfolgt.

Die F i g. 2 zeigt ein Ausführungsbeispiel eines elektronischen Gleichstrom-Telegrafiesenders mit einstufiger Spannungsumschaltung. Die Schaltung zeigt die an sich bekannten und in der F i g. 1 bereits dargestellten und erläuterten Baustufen, nämlich die Sendetastschaltung ST und die Stromregelschaltung IK. Die Telegrafenbatterie besteht aus den beiden Teilspannungen +TB (+60 V) und −TB (−60 V) und der geerdeten Mitte MT der Batterie. Die Telegrafenbatterie ist nur als Beispiel angeordnet; es kann jede beliebige Spannungsquelle benutzt werden. Die Schaltstufe SU besteht aus den Transistoren T1 und T2, den Dioden D1, D2, der Zenerdiode Z1 und den Widerständen R1, R2 und R3. Der Spannungsschwellwert Ur wird durch die Zenerspannung der Zenerdiode Z1 bestimmt. Der positive Pol +TB ( +60 V) der Telegrafenbatterie ist mit der Ader a der Leitung L fest verbunden.

Solange die Spannung am Ausgang A der Regelschaltung IK positiver ist als der durch den Spannungsabfall über dem Widerstand R3 gebildete Spannungsschwellwert Ur, ist der Transistor T1 und damit auch der Transistor T2 gesperrt. Am Eingang E der Stromregelschaltung IK ist über die leitend gesteuerte Diode D2 die Mitte MT der Telegrafenbatterie angeschaltet. Wenn jedoch die Spannung am Ausgang A der Regelschaltung IK über den Spannungsschwellwert Ur steigt (die Spannung am Ausgang A wird negativer), wird der Transistor T1 leitend gesteuert. Der leitende Schalttransistor T1 steuert den Schalttransistor T2 ebenfalls in den leitenden Zustand. Der Transistor T2 schaltet den negativen Pol −TB (−60 V) der Telegrafenbatterie an den Eingang E der Stromregelschaltung IK durch. Die Diode D2 ist gesperrt und entkoppelt die Mitte MT der Telegrafenbatterie von der Stromregelschaltung. Der Stromregelschaltung IK wird in diesem Fall die gesamte Spannung der Telegrafenbatterie in Höhe von 120 V zugeführt.

Sinkt die Spannung am Ausgang A der Regelschaltung IK unter den Wert des Schwellwertes Ur (die Spannung am Ausgang A wird positiver), so wird der Transistor T1 in den gesperrten Zustand gesteuert. Die Diode D1 ist dann gesperrt und entkoppelt den Transistor T1 von der Übertragungsleitung L. Der Transistor T1 steuert dann ebenfalls den Transistor T2 in den gesperrten Zustand. Damit ist der negative Pol −TB der Telegrafenbatterie vom Eingang E der Stromregelschaltung IK abgetrennt. Die Diode D2 ist wieder leitend, und die Mitte MT der Telegrafenbatterie liegt am Eingang E der Stromregelschaltung IK. Damit ist der beschriebene Ausgangszustand wieder erreicht.

Der Spannungsschwellwert Ur wird durch entsprechende Wahl einer Zenerdiode so gewählt, daß die zweite Spannungshälfte −TB (−60 V) zugeschaltet wird, bevor die Stromregelschaltung den Regelbereich überschritten hat.

Die F i g. 3 zeigt ein weiteres vorteilhaftes Ausführungsbeispiel eines elektronischen Gleichstrom-Telegrafiesenders mit Einfachstromtastung und mehrstufiger Spannungsumschaltung.

Die Sendeschaltung besteht aus der bekannten Sendetastschaltung ST und der Stromregelschaltung IK. Die Schaltstufe wird durch die Dioden D1 bis D4 und die Schalttransistoren T1 bis T4 realisiert. Die Telegrafenspannung besteht aus den Teilspannungen U1 bis U6. Es wird eine Anschlußleitung L angenommen, bei der die kleinste Telegrafiespannung an den Eingang E der Regelschaltung IK angeschaltet ist, nämlich die Spannungen U1 + U2(MT1). Die Diode D2 ist leitend, und die Schalttransistoren T1 bis T4 befinden sich im gesperrten Zustand. Die Diode D1 ist gesperrt und entkoppelt den Transistor T1 von der Leitung L. Als Schwellwert Ur1 wird die Teilspannung U1 verwendet. Sobald die Spannung am Ausgang A der Stromregelschaltung IK den Wert der Spannung U1 überschreitet (die Spannung am Ausgang A wird negativer), wird der Transistor T1 leitend gesteuert, der seinerseits den Schalttransistor T2 leitend steuert. Der Transistor T2 schaltet im leitenden Zustand den negativen Pol der Teilspannung U4 (MT2) über die leitende Diode D3 an den Eingang E der Stromregelschaltung IK. Die Diode D2 ist dann gesperrt und damit der negative Pol der Teilspannung U2 (MT1) vom Eingang der Stromregelschaltung entkoppelt. Der Stromregelschaltung wird eine Summenspannung aus den Teilspannungen U1 + U2 + U3 + U4 zugeführt. Steigt nun die Spannung am Ausgang A der Regelschaltung IK über den Wert der Teilspannung U1 + U2 + U3 (die Spannung am Ausgang wird negativer), die jetzt den Schwellwert Ur2 für eine weitere Umschaltung bildet, an, so werden die Transistoren T3 und T4 leitend gesteuert. Über die Schaltstrecke des Transistors T4 und die leitende Diode D4 wird der negative Pol der Teilspannung U6 (MT3) an den Eingang E der Regelschaltung IK angeschaltet. Die Diode D3 entkoppelt den Transistor T2 vom Eingang der Stromregelschaltung.

Beim Unterschreiten der jeweiligen Schwellwerte Ur2 bzw. Ur1 (die Spannung am Ausgang A wird positiver) wird der Eingang E der Stromregelschaltung an eine niedrigere Teilspannung zurückgeschaltet. Die Widerstände R1 und R2 bzw. R3 und R4 bestimmen die erforderlichen Basisströme der Transistoren im leitenden Zustand.

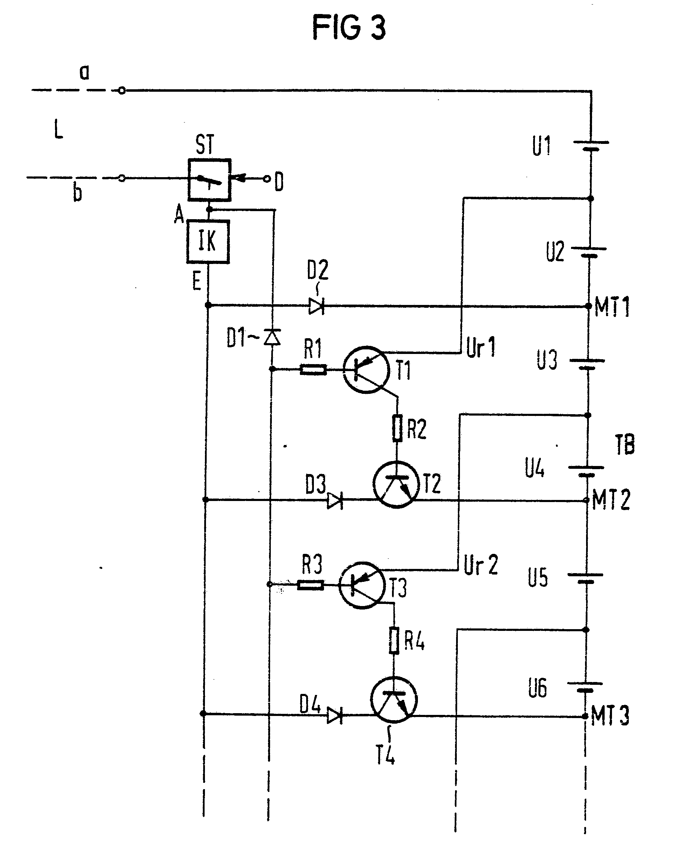

Die Anzahl der Spannungsumschaltungen kann beliebig erhöht werden. Für jede weitere Spannungsumschaltung sind die sich aus der Fig. 3 ergebenden Bauelemente jeweils erforderlich, nämlich zwei Schalttransistoren, eine Diode, zwei Strombegrenzungswiderstände und zwei weitere Teilspannungen. Bei einer weiteren Spannungsumschaltung in Fig. 3 würde der zusätzlich zu überschreitende Spannungsschwellwert durch die Teilspannung U1 + U2 + U3 + U4 + U5 gebildet.

Die in den Fig. 2 und 3 dargestellten Ausführungsbeispiele lassen sich auf einfache Art und Weise auf einen Sender mit Doppelstromtastung erweitern. Dazu ist lediglich erforderlich, daß die an die Ader b der Leitung L angeschalteten Baustufen, spiegelbildlich nach oben geklappt werden.

## Patentansprüche

1. Schaltungsanordnung für einen elektronischen Gleichstrom-Telegrafiesender mit einer Sendetastschaltung, einer nach dem Prinzip eines stetigen Reglers arbeitenden Stromregelschaltung zur Konstanthaltung des Stromes auf der Übertragungsleitung und einer Telegrafenbatterie, wobei durch die Sendetastschaltung im Rhythmus der binären Datenzeichen die Telegrafenbatterie an die Übertragungsleitung angeschaltet ist, dadurch gekennzeichnet, daß die Telegrafenbatterie (TB) mehrere Abgriffe (MT, −TB; MT1, MT2, MT3) aufweist und jeweils nur ein Abgriff über eine Schaltstufe (T2, D2; T2, T4, D2 bis D4) an der Stromregelschaltung (IK) angeschaltet ist, daß eine die auf der Übertragungsleitung (L) auftretende Sendespannung mit einer Schwellwertspannung vergleichende Spannungsschwellwertstufe (T1; T1, T3) vorgesehen ist und daß die Spannungsschwellwertstufe (T1; T1, T3) so ausgebildet ist, daß bei einer gegenüber der Schwellwertspannung höheren Sendespannung ein Abgriff (−TB; MT2 oder MT3) der Telegrafenbatterie (TB) mit einem höheren Spannungswert und bei einer gegenüber der Schwellwertspannung niedrigeren Sendespannung ein Abgriff (MT; MT2 oder MT1) der Telegrafenbatterie (TB) mit einem niedrigeren Spannungswert mit der Übertragungsleitung (L) unter Konstanthaltung des auf dieser fließenden Stromes verbunden ist.

2. Schaltungsanordnung nach Anspruch 1, dadurch gekennzeichnet, daß ein Abgriff (MT; MT2 oder MT1) der Telegrafenbatterie (TB) mit einem niedrigeren Spannungswert über ein Entkopplungsglied (D2; D2, D3) mit dem Eingang (E) der Stromregelschaltung (IK) verbunden ist, daß zwischen dem Ausgang (A) der Stromregelschaltung (IK) und einer die Schwellwertspannung (Ur; Ur1, Ur2) bereitstellenden Spannungsabgabeeinrichtung (R3, Z1; U1, U1 bis U3) ein erster Transistor (T1; T1, T3) so vorgesehen ist, daß dieser lediglich dann im gesperrten Zustand ist, wenn die auf der Übertragungsleitung (L) auftretende Sendespannung niedriger ist als die Schwellwertspannung (Ur; Ur1, Ur2), und daß zwischen dem Eingang (E) der Stromregelschaltung (IK) und einem Abgriff (−TB; MT2 oder MT3) der Telegrafenbatterie (TB) mit einem höheren Spannungswert die Laststrecke eines zweiten Transistors (T2; T2, T4) vorgesehen ist, der von dem ersten Transistor (T1; T1, T3) lediglich dann in den leitenden Zustand gesteuert ist, wenn dieser erste Transistor (T1; T1, T3) sich im leitenden Zustand befindet.

3. Schaltungsanordnung nach Anspruch 2, dadurch gekennzeichnet, daß das jeweilige Entkoppelglied (D2; D2, D3) eine Diode ist.

4. Schaltungsanordnung nach einem der Ansprüche 1 bis 3, dadurch gekennzeichnet, daß die Schwellwertspannung (Ur) durch eine Zenerdiode (Z1) festgelegt ist.

5. Schaltungsanordnung nach einem der Ansprüche 1 bis 3, dadurch gekennzeichnet, daß die Schwellwertspannung von einem gesonderten Abgriff (z. B. U1) der Telegrafenbatterie (TB) abgenommen ist.

## Claims

1. A circuit arrangement for an electronic direct current telegraphic transmitter having a transmitting sample circuit, a current regulating circuit which operates in accordance with the principle of a constant regulator and serves to maintain the current constant on the transmission line and having a telegraphic battery, where by means of the transmitting sample circuit, the telegraphic battery is connected to the transmission line in the rhythm of the binary data characters, characterised in that the telegraphic battery (TB) has a plurality of taps (MT, −TB; MT1, MT2, MT3) and only one tap is selectively connected to the current control circuit (IK) by a switching stage (T2, D2; T2, T4, D2 to D4), that there is provided a voltage threshold value stage (T1; T1, T3) which compares the transmitting voltage occurring on the transmission line (L) with a threshold value voltage, and that the voltage threshold value stage (T1; T1, T3) is so designed that there is connected to the transmission line (L), in the case of a transmitting voltage higher than the threshold value voltage, a tap (−TB; MT2 or MT3) of the telegraphic battery (TB) having a higher voltage value, and in the case of a transmitting voltage lower than the threshold value voltage, a tap (MT; MT2 or MT1) of the telegraphic battery (TB) having a lower voltage value, to maintain the current which flows thereon constant.

2. A circuit arrangement as claimed in Claim 1, characterised in that a tap (MT; MT2 or MT1) of the telegraphic battery (TB) having a lower voltage value is connected to the input (E) of the current control circuit (IK) by a decoupling element (D2; D2, D3), that between the output (A) of the current control circuit (IK) and a voltage emitting device (R3, Z1; U1, U1 to U3) which makes available the threshold value voltage (Ur; Ur1, Ur2), there is arranged a first transistor (T1; T1, T3) in such a manner that said transistor is only in the blocked state when the transmitting voltage occurring on the transmission line (L) is lower than the threshold value voltage (Ur; Ur1, Ur2), and that between the input (E) of the current control circuit (IK) and a tap (−TB; MT2 or MT3) of the telegraphic battery (TB) having a higher voltage value, there is arranged the load path of a second transistor (T2; T2, T4) which is only controlled into the conductive state by the first transistor (T1; T1, T3) when the first transistor (T1; T1, T3) is in the conductive state.

3. A circuit arrangement as claimed in Claim 2, characterised in that the respective decoupling element (D2; D2, D3) is a diode.

4. A circuit arrangement as claimed in one of Claims 1 to 3, characterised in that the threshold value voltage (Ur) is determined by a Zener diode (Z1).

5. A circuit arrangement as claimed in one of Claims 1 to 3, characterised in that the threshold value voltage is tapped from a separate tap (e. g. U1) of the telegraphic battery (TB).

**Revendications**

1. Montage pour un émetteur télégraphique électronique à courant continu avec un circuit à manipulateur d'émission, un circuit de réglage du courant opérant selon le principe d'un régulateur en continu en vue de maintenir constant le courant sur la ligne de transmission, et une batterie télégraphique, le circuit à manipulateur d'émission branchant la batterie télégraphique à la ligne de transmission au rythme des signaux de données binaires, caractérisé par le fait que la batterie télégraphique (TB) comporte plusieurs prises (MT, −TB; MT1, MT2, MT3) et qu'une seule prise à la fois est branchée au circuit de réglage du corrant par l'intermédiaire d'un étage de branchement (T2, D2; T2, T4, D2 à D4),

qu'il est prévu un étage de valeur de seuil de tension (T1; T1, T3) qui compare la tension d'émission qui apparaît sur la ligne de transmission (L) avec une tension de valeur de seuil, et que l'étage de valeur de seuil de tension (T1;

T1, T3) est réalisé de telle façon que pour une tension d'émission qui est plus élevée par rapport à la tension de valeur de seuil plus élevée c'est une prise (−TB; MT2 ou MT3) de la batterie télégraphique (TB) de valeur de tension plus élevée, alors que pour une tension d'émission moins élevée par rapport à la tension de valeur de seuil, c'est une prise (MT, MT2 ou MT1) de la batterie télégraphique (TB) à valeur de tension moins élevée, qui est reliée à la ligne de transmission (L) avec maintien à une valeur constante du courant passant dans cette dernière.

2. Montage selon la revendication 1, caractérisé par le fait qu'une prise (MT; MT2 ou MT1) de la batterie télégraphique (TB) à valeur de tension moins élevée, est reliée, par l'intermédiaire d'un dispositif de découplage (D2; D2, D3), à l'entrée (E) du circuit de réglage du courant (IK), qu'entre la sortie (A) du circuit de réglage du courant (IK) et un dispositif de fourniture de tension (R3, Z1; U1, U1 à U3) préparant la tension de valeur de seuil (Ur; Ur1, Ur2), est prévu un premier transistor (T1; T1, T3) de telle manière que celui-ci n'est dans son état bloqué que lorsque la tension d'émission qui apparaît sur la ligne de transmission (L) est plus faible que la tension de valeur de seuil (Ur; Ur1, Ur2),

et qu'entre l'entrée (E) du circuit de réglage du courant (IK) et une prise (−TB; MT2 ou MT3) de la batterie télégraphique (TB) d'une valeur de tension plus élevée, est prévu le circuit de charge d'un second transistor (T2; T2, T4) qui est commandé dans son état passant par le premier transistor (T1; T1, T3) uniquement lorsque ledit premier transistor (T1; T1, T3) se trouve dans son état passant.

3. Montage selon la revendication 2, caractérisé par le fait que le dispositif de découplage (D2; D2, D3) est une diode.

4. Montage selon l'une des revendications 1 à 3, caractérisé par le fait que la tension de valeur de seuil (Ur) est fixée par une diode Zener (Z1).

5. Montage selon l'une des revendications 1 à 3, caracterisé par le fait que la tension de valeur de seuil est prélevée au niveau d'une prise particulière (par exemple U1) de la batterie télégraphique (TB).

# FIG 1

# FIG 2

# FIG 3